# EUROPÄISCHE PATENTSCHRIFT

(11) **EP 3 476 026 B1**
(45) Veröffentlichungstag und Bekanntmachung des Hinweises auf die Patenterteilung: **04.09.2024**
(21) Anmeldenummer: 18700330.6
(22) Anmeldetag: 10.01.2018
(51) Int. Cl.: H02K 15/00, H02K 5/04, H02K 7/116, H02K 11/33, H02K 11/30, H02K 15/14, H02K 11/215, H02K 5/24

(54) **BAUKASTENSYSTEM ZUR HERSTELLUNG VON ANTRIEBEN, MIT EINER GETRIEBEEINHEIT, EINER ELEKTRISCHEN MOTOREINHEIT UND EINER ELEKTRONIKEINHEIT**
MODULAR SYSTEM FOR MANUFACTURING DRIVES, COMPRISING A GEAR UNIT, AN ELECTRIC MOTOR UNIT AND AN ELECTRONIC UNIT
SYSTÈME MODULAIRE POUR FABRIQUER UN DISPOSITIF D'ENTRAÎNEMENT, COMPORTANT UNE BOÎTE À VITESSES, UNE UNITÉ DE MOTEUR ÉLECTRIQUE AINSI QU'UNE UNITÉ ÉLECTRONIQUE

(30) Priorität: 30.01.2017 DE 102017101739
(43) Veröffentlichungstag der Anmeldung: 01.05.2019
(73) Patentinhaber: Ebm-Papst St. Georgen GmbH & CO. KG, 78112 St. Georgen im Schwarzwald (DE)
(72) Erfinder: FLAIG, Markus, 78739 Hardt (DE); POYRAZ, Serkan, 78048 Villingen-Schwenningen (DE); SOPEJSTAL, Jürgen, 90552 Röthenbach (DE); MESSMER, Volker, 78250 Tengen (DE); RAPPENECKER, Hermann, 78147 Vöhrenbach (DE); HORNBERGER, Jörg, 72280 Dornstetten-Aach (DE)
(74) Vertreter: Staeger & Sperling Partnerschaftsgesellschaft mbB
(86) Internationale Anmeldenummer: PCT/EP2018/050551
(87) Internationale Veröffentlichungsnummer: WO 2018/137930

(56) Entgegenhaltungen:
- EP-A2- 1 950 870
- WO-A1-99/06743
- WO-A2-2004/077644
- DE-A1- 102004 033 745
- DE-A1- 102007 010 865
- DE-A1- 19 727 202
- US-A- 5 170 851
- US-A- 5 912 541
- US-A1- 2006 255 666

## Beschreibung

### Stand der Technik

Die Erfindung betrifft eine Stückgutförderrolle eines Stückgutförderers mit einem Baukastensystem zur Herstellung von Antrieben nach Anspruch 1 sowie ein Verfahren zur Herstellung eines Antriebsnach Anspruch 13.

Aus der Praxis ist bekannt, dass speziell ausgelegte Stückgutförderantriebe für unterschiedliche Applikationen vorteilhaft sind. Dies bedingt die Notwendigkeit einer hohen Anzahl an unterschiedlichen Stückgutförderantrieben. Aus dem Stand der Technik sind vorgefertigte Stückgutförderantriebe bekannt, welche beispielsweise mit oder ohne Getriebe und/oder mit oder ohne Elektronikmodul ausgestattet sind, wodurch eine optimale Abstimmung auf eine gewünschte Applikation eingeschränkt ist.

Aus den Schriften EP 1 950 870 A2, DE 10 2007 010 865 A1 und US 5,170,851 A sind zudem bereits verschiedene Baukastensysteme bekannt. Weiterer relevanter Stand der Technik ist beispielhaft durch das Dokument DE 197 27 202 A1 gegeben.

Die Aufgabe der Erfindung besteht insbesondere darin, Antriebe, insbesondere Stückgutförderantriebe, mit unterschiedlichen Antriebseigenschaften vorteilhaft bereitzustellen.

Erfindungsgemäß wird daher eine Stückgutförderrolle eines Stückgutförderers mit einem Baukastensystem gemäß Anspruch 1 sowie ein zugehöriges Verfahren gemäß Anspruchs 13 vorgeschlagen. Vorteilhafte Ausgestaltungen und Weiterbildungen der Erfindung können den Unteransprüchen entnommen werden.

### Vorteile der Erfindung

Es wird eine Stückgutförderrolle eines Stückgutförderers mit einem Baukastensystem zur Herstellung von Rotationsantrieben einer Stückgutförderrolle eines Stückgutförderers mit unterschiedlichen Antriebseigenschaften vorgeschlagen, mit zumindest einer ersten Gruppe von Getriebeeinheiten, welche zumindest eine Getriebeeinheit umfasst, mit zumindest einer zweiten Gruppe von Motoreinheiten, welche zumindest eine Motoreinheit umfasst, und mit einer dritten Gruppe von Elektronikeinheiten, welche zumindest eine Elektronikeinheit zur Ansteuerung der Motoreinheit umfasst, welche zur Herstellung des Stückgutförderantriebs miteinander kombinierbar sind.

Unter einem "Antrieb" soll insbesondere eine Apparatur verstanden werden, welche zu einer Erzeugung und/oder Übertragung und/oder Wandlung einer Energie, insbesondere einer chemischen Energie und/oder einer elektrischen Energie und/oder einer thermischen Energie, und/oder einer Bewegungskenngröße, insbesondere einer Drehbewegungskenngröße, insbesondere einer Drehrichtung und/oder einer Drehgeschwindigkeit und/oder eines Drehmoments, vorgesehen ist. Der Antrieb ist als ein Rotationsantrieb einer Stückgutförderrolle ausgebildet, welche insbesondere dazu vorgesehen ist Stückgut zu bewegen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Antriebseigenschaft" soll insbesondere eine Antriebskenngröße, wie beispielsweise eine Geschwindigkeit, insbesondere eine Winkelgeschwindigkeit und/oder ein Drehmoment und/oder eine Beschleunigungsrampe und/oder eine Abbremsrampe und/oder eine Drehrichtung und/oder eine Antriebsleistung und/oder eine Ansteuerbarkeit verstanden werden. Unter einer "Getriebeeinheit" soll insbesondere eine Einheit verstanden werden, welche dazu vorgesehen ist, zumindest eine Drehbewegung und/oder ein Drehmoment, bevorzugt an einem Eintrieb der Getriebeeinheit, aufzunehmen und/oder umzuwandeln und/oder auszugeben, bevorzugt an einem Abtrieb der Getriebeeinheit. Insbesondere weist die Getriebeeinheit zumindest eine Getriebeübersetzungsstufe zwischen dem Eintrieb der Getriebeeinheit und dem Abtrieb der Getriebeeinheit auf. Der Abtrieb der Getriebeeinheit ist insbesondere dazu vorgesehen, mechanische Energie, bevorzugt Rotationsenergie, auf eine Stückgutförderrolle zu übertragen.

Unter einer "Motoreinheit" soll insbesondere eine Einheit verstanden werden, welche dazu vorgesehen ist, eine Energie, insbesondere eine chemische Energie und/oder eine elektrische Energie und/oder eine thermische Energie in eine Bewegungsenergie, bevorzugt eine Rotationsenergie, umzuwandeln. Vorzugsweise weist die Motoreinheit zumindest einen Elektromotor auf.

Unter einer "Elektronikeinheit" soll insbesondere eine Einheit verstanden werden, welche dazu vorgesehen ist, ein elektrisches Signal und/oder ein digitales Signal zu empfangen und/oder zu verarbeiten und/oder umzuwandeln und/oder auszugeben. Insbesondere ist die Elektronikeinheit dazu vorgesehen, einen elektrischen Vorgang und/oder eine Antriebskenngröße zu schalten und/oder zu regeln und/oder zu überwachen und/oder zu verstärken. Zudem ist die Elektronikeinheit insbesondere dazu vorgesehen, eine Kenngröße, beispielsweise einen elektrischen Sollwert, zu überwachen und/oder anzuzeigen und gegebenenfalls eine Abweichung anzuzeigen und/oder eine Fehlermeldung und/oder eine Warnung auszugeben. Vorzugsweise umfasst die Elektronikeinheit zumindest eine Leiterplatte. Bevorzugt weist die Elektronikeinheit verschiedene Funktionalitäten auf, wie beispielsweise eine Ausgabefunktion und/oder Regelelektronik für einen Analogsollwert und/oder einen CAN-Bus und/oder ein weiteres dem Fachmann sinnvoll erscheinendes Bussystem und/oder eine Kommunikationsschnittstelle, insbesondere zur Kommunikation mit einer externen Steuereinheit und/oder eine Geschwindigkeitssteuerung und/oder eine Richtungsumkehrsteuerung und/oder eine Bremsfunktionssteuerung und/oder eine Energierückgewinnung und/oder eine Lastenerkennung und/oder eine Stückgutzählfunktion.

Getriebe-, Motor- und Elektronikeinheiten sind jeweils zu einer Gruppe zusammengefasst. Insbesondere weisen die Einheiten einer Gruppe zumindest im Wesentlichen identische und/oder baugleiche Schnittstellen zum Anbau zumindest einer weiteren Einheit einer anderen Gruppe auf und/oder sind vorzugsweise zur Erfüllung einer gleichen übergeordneten Funktion vorgesehen, wobei insbesondere spezifische Eigenschaften der übergeordneten Funktion unterschiedlich sein können. Unter "im Wesentlichen identisch" soll hierbei insbesondere verstanden werden, dass die Schnittstellen aller Einheiten einer Gruppe, insbesondere alle an einer kraft- und/oder formschlüssigen Verbindung zweier Einheiten beteiligten Teile der Einheiten einer Gruppe jeweils die gleichen Bauelemente aufweisen und/oder äußerlich frei sind von, mit bloßem Auge erkennbaren, insbesondere makroskopischen, Unterschieden, insbesondere Formunterschieden. Unter einer "übergeordneten Funktion" soll in diesem Zusammenhang insbesondere eine verallgemeinerte, von einer Einheit bewerkstelligte Funktion verstanden werden. Insbesondere stellt die übergeordnete Funktion der Getriebeeinheit eine Übersetzung einer Eingangsbewegung in eine Ausgangsbewegung dar. Insbesondere stellt die übergeordnete Funktion der Motoreinheit eine Umwandlung einer beliebigen anderen Energieform in eine Rotationsenergie dar. Insbesondere stellt die übergeordnete Funktion der Elektronikeinheit die Ausgabe und/oder Verarbeitung eines elektrischen und/oder digitalen Signals dar.

Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird.

Darunter, dass die Gruppen zu einer Herstellung der Antriebe, insbesondere der Stückgutförderantriebe miteinander kombinierbar sind, soll in diesem Zusammenhang insbesondere verstanden werden, dass jeweils genau eine der Getriebeeinheiten der ersten Gruppe mit genau einer Motoreinheit der zweiten Gruppe und mit genau einer Elektronikeinheit der dritten Gruppe bei der Herstellung der Antriebe, insbesondere der Stückgutförderantriebe Verwendung finden und vorzugsweise zu einem Antrieb, insbesondere einem Stückgutförderantrieb zusammenfügbar ist. Insbesondere weist dabei zumindest eine der drei Gruppen, bevorzugt weisen alle Gruppen mehr als eine Einheit auf. Vorzugsweise unterscheiden sich alle Einheiten innerhalb derselben Gruppe in zumindest einer Eigenschaft. Beispielsweise weisen die Getriebeeinheiten unterschiedliche Getriebeübersetzungen auf, wonach bei einer Herstellung eines bestimmten Antriebs, insbesondere eines bestimmten Stückgutförderantriebs eine bestimmte Getriebeeinheit aus der ersten Gruppe ausgewählt werden muss und/oder die Motoreinheiten weisen beispielsweise unterschiedliche Motorleistungsklassen auf, wonach bei einer Herstellung eines bestimmten Antriebs, insbesondere eines bestimmten Stückgutförderantriebs eine bestimmte Motoreinheit aus der zweiten Gruppe ausgewählt werden muss und/oder die Elektronikeinheiten weisen beispielsweise unterschiedliche Elektronikleistungsklassen auf, wonach bei einer Herstellung eines bestimmten Antriebs, insbesondere eines bestimmten Stückgutförderantriebs eine bestimmte Elektronikeinheit aus der dritten Gruppe ausgewählt werden muss.

Durch einen derartigen Baukasten können Antriebe, insbesondere Stückgutförderantriebe, vorteilhaft mit unterschiedlichen Antriebseigenschaften insbesondere kostengünstig bereitgestellt werden. Insbesondere kann dadurch vorteilhaft eine hohe Flexibilität erreicht werden. Zudem kann eine Abstimmung auf eine gewünschte Applikation vorteilhaft erleichtert werden. Ferner können eine Bauteilevielfalt und/oder Lagerhaltungskosten reduziert werden. Weiterhin kann ein vereinfachter Umbau und/oder eine vereinfachte Modifikation und/oder ein vereinfachtes technisches und/oder elektronisches Auf- und/oder Nachrüsten der Antriebe, insbesondere der Stückgutförderantriebe, insbesondere durch den Anwender selbst, ermöglicht werden.

In einer bevorzugten Ausgestaltung der Erfindung wird vorgeschlagen, dass die Gruppen von Getriebeeinheiten, Motoreinheiten und Elektronikeinheiten beliebig miteinander kombinierbar sind. Unter "beliebig miteinander kombinierbar" soll in diesem Zusammenhang insbesondere verstanden werden, dass jede Getriebeeinheit der ersten Gruppe, jede Motoreinheit der zweiten Gruppe und jede Elektronikeinheit der dritten Gruppe, insbesondere ohne Änderungen und/oder Anpassungen, in beliebiger Kombination mit jeder Einheit der übrigen Gruppen bei der Herstellung der Antriebe, insbesondere der Stückgutförderantriebe Verwendung finden kann und vorzugsweise zu einem Antrieb, insbesondere einem Stückgutförderantrieb mit gewünschten Antriebseigenschaften zusammenfügbar ist. Vorzugsweise sind zumindest die Schnittstellen zur Verbindung zweier Einheiten, insbesondere innerhalb einer Gruppe, bei allen der Gruppe zugehörigen Einheiten im Wesentlichen identisch zueinander ausgestaltet. Hierdurch können Kosten reduziert werden. Ferner kann dadurch die Flexibilität bei einer Herstellung von Antrieben, insbesondere Stückgutförderantrieben mit unterschiedlichen Antriebseigenschaften weiter gesteigert werden.

Ferner wird vorgeschlagen, dass die erste Gruppe zumindest zwei verschiedene Getriebeeinheiten mit verschiedenen Getriebeübersetzungen, insbesondere Getriebeuntersetzungen, umfasst. Unter einer "Getriebeübersetzung" soll hierbei insbesondere eine Drehzahländerung, insbesondere eine Drehzahlerhöhung und/oder eine Drehzahlerniedrigung zwischen einem Eintrieb einer Getriebeeinheit und einem Abtrieb einer Getriebeeinheit verstanden werden. Insbesondere umfasst die erste Gruppe zumindest zwei Getriebeeinheiten, welche sich insbesondere bezüglich einer Getriebeübersetzung und/oder bezüglich einer Verwendung eines speziellen Getriebefetts, welches beispielsweise für unterschiedliche Temperaturbereiche auslegbar ist, unterscheiden, wodurch vorteilhaft eine flexible Herstellung einer Vielzahl an verschiedenen Antrieben, insbesondere Stückgutförderantrieben, vorzugsweise mit unterschiedlichen Antriebseigenschaften, insbesondere unterschiedlichen Übersetzungsverhältnissen ermöglicht werden kann. Dadurch kann vorteilhaft eine optimierte Abstimmung der Antriebe, insbesondere der Stückgutförderantriebe auf eine gewünschte Applikation erreicht werden. Insbesondere können verschiedene Getriebeeinheiten der ersten Gruppe innerhalb eines Antriebs, insbesondere eines Stückgutförderantriebs, jeweils eine bestimmte Funktionseinheit jedoch mit verschiedenen Funktionselementen, beispielsweise verschiedenen Zahnrädern mit unterschiedlichen Verzahnungen, ausbilden. Insbesondere weist jede Getriebeeinheit der ersten Gruppe zumindest eine definierte Schnittstelle zu einem Anbau einer Motoreinheit der zweiten Gruppe auf. Vorzugsweise weist die Schnittstelle ein Steckritzel der Getriebeeinheiten auf, welches insbesondere dazu vorgesehen ist, ein Getriebeelement der Getriebeeinheiten, besonders bevorzugt den Eintrieb der Getriebeeinheiten, beispielsweise ein Sonnenrad eines Planetengetriebes, und/oder eine direkte Aufnahme für eine Antriebswelle der Motoreinheiten auszubilden, wobei vorzugsweise die Antriebswelle eine Verzahnung aufweist, welche insbesondere dazu vorgesehen ist der Antriebswelle die Funktion des Getriebeelements und/oder des Eintriebs zu verleihen. Hierdurch kann vorteilhaft eine einfache und schnelle Montage von Antrieben, insbesondere Stückgutförderantrieben mit gewünschten Antriebseigenschaften, insbesondere mit gewünschten Übersetzungsverhältnissen ermöglicht werden, welche insbesondere von einem Laien unter Zuhilfenahme einer Betriebsanleitung bewerkstelligbar ist.

Zudem wird vorgeschlagen, dass die zweite Gruppe zumindest zwei Motoreinheiten mit verschiedenen Motorleistungsklassen umfasst, wodurch vorteilhaft eine flexible Herstellung einer Vielzahl an verschiedenen Antrieben, insbesondere Stückgutförderantrieben, vorzugsweise mit unterschiedlichen Antriebseigenschaften, insbesondere unterschiedliche abrufbare Antriebsleistungen, ermöglicht werden kann. Dadurch kann vorteilhaft eine optimierte Abstimmung der Antriebe, insbesondere der Stückgutförderantriebe, auf eine gewünschte Applikation erreicht werden. Insbesondere können die Motoreinheiten der zweiten Gruppe innerhalb eines Antriebs, insbesondere eines Stückgutförderantriebs, eine bestimmte Funktionseinheit, jedoch mit verschiedenen Funktionsparametern, beispielsweise verschiedenen, durch die Motoreinheiten erbrachten Leistungswerten und/oder verschiedenen Spannungswerten der Motoreinheiten, ausbilden. Insbesondere weist jede Motoreinheit der zweiten Gruppe zumindest eine definierte Schnittstelle zu einem Anbau einer Elektronikeinheit der dritten Gruppe auf. Hierdurch kann vorteilhaft eine einfache und schnelle Montage von Antrieben, insbesondere Stückgutförderantrieben mit gewünschten Antriebseigenschaften, insbesondere mit gewünschten Funktionsparametern der Motoreinheiten ermöglicht werden, welche insbesondere von einem Laien unter Zuhilfenahme einer Betriebsanleitung bewerkstelligbar ist.

In einer bevorzugten Ausgestaltung der Erfindung umfasst die zweite Gruppe zumindest zwei Motoreinheiten mit verschiedenen Motorspannungsklassen, wodurch vorteilhaft eine flexible Herstellung einer Vielzahl an verschiedenen Antrieben, insbesondere Stückgutförderantrieben, vorzugsweise mit unterschiedlichen Antriebseigenschaften, insbesondere unterschiedlichen Spannungswerten der Motoreinheiten ermöglicht werden kann. Dadurch kann vorteilhaft eine optimierte Abstimmung der Antriebe, insbesondere der Stückgutförderantriebe auf eine gewünschte Applikation erreicht werden.

Des Weiteren wird vorgeschlagen, dass die dritte Gruppe zumindest zwei Elektronikeinheiten mit verschiedenen Elektronikleistungsklassen umfasst, wodurch vorteilhaft eine flexible Herstellung einer Vielzahl an verschiedenen Antrieben, insbesondere Stückgutförderantrieben, vorzugsweise mit unterschiedlichen Antriebseigenschaften, insbesondere unterschiedlichen Leistungsstufen der Elektronikeinheiten ermöglicht werden kann. Dadurch kann vorteilhaft eine optimierte Abstimmung der Antriebe, insbesondere der Stückgutförderantriebe auf eine gewünschte Applikation erreicht werden. Insbesondere können die Elektronikeinheiten der zweiten Gruppe innerhalb eines Antriebs, insbesondere eines Stückgutförderantriebs, eine bestimmte Funktionseinheit, jedoch mit verschiedenen Funktionsparametern, beispielsweise verschiedenen Leistungswerten der Elektronikeinheiten und/oder verschiedenen Spannungswerten der Elektronikeinheiten und/oder verschiedenen Funktionalitäten der Elektronikeinheiten, ausbilden. Insbesondere weist jede Elektronikeinheit der dritten Gruppe zumindest eine definierte Schnittstelle zu einem Anbau einer Motoreinheit der zweiten Gruppe auf. Hierdurch kann vorteilhaft eine einfache und schnelle Montage von Antrieben, insbesondere Stückgutförderantrieben mit gewünschtem Antriebseigenschaften, insbesondere mit gewünschten Funktionsparametern der Elektronikeinheiten ermöglicht werden, welche insbesondere von einem Laien unter Zuhilfenahme einer Betriebsanleitung bewerkstelligbar ist.

Ferner wird vorgeschlagen, dass die dritte Gruppe zumindest zwei Elektronikeinheiten mit verschiedenen Elektronikspannungsklassen umfasst, wodurch vorteilhaft eine flexible Herstellung einer Vielzahl an verschiedenen Antrieben, insbesondere Stückgutförderantrieben, vorzugsweise mit unterschiedlichen Antriebseigenschaften, insbesondere unterschiedlichen Spannungsstufen der Elektronikeinheiten ermöglicht werden kann. Dadurch kann vorteilhaft eine optimierte Abstimmung der Antriebe, insbesondere der Stückgutförderantriebe auf eine gewünschte Applikation erreicht werden.

In einer weiteren bevorzugten Ausgestaltung der Erfindung umfasst die dritte Gruppe zumindest zwei Elektronikeinheiten mit verschiedenen Elektronikfunktionsklassen. Unter einer "Elektronikfunktionsklasse" soll hierbei insbesondere das Vorhandensein zumindest einer Funktionalität, bevorzugt einer Kombination von Funktionalitäten verstanden werden, wie beispielsweise eine Ausgabefunktion und/oder Regelelektronik für einen Analogsollwert und/oder einen CAN-Bus und/oder ein weiteres dem Fachmann sinnvoll erscheinendes Bussystem und/oder eine Kommunikationsschnittstelle, insbesondere zur Kommunikation mit einer externen Steuereinheit und/oder eine Geschwindigkeitssteuerung und/oder eine Richtungsumkehrsteuerung und/oder eine Bremsfunktionssteuerung und/oder eine Energierückgewinnung und/oder eine Lastenerkennung und/oder eine Stückgutzählfunktion. Hierdurch kann vorteilhaft eine flexible Herstellung einer Vielzahl an verschiedenen Antrieben, insbesondere Stückgutförderantrieben, vorzugsweise mit unterschiedlichen Antriebseigenschaften, insbesondere unterschiedlichen Funktionalitäten der Elektronikeinheiten ermöglicht werden kann. Dadurch kann vorteilhaft eine optimierte Abstimmung der Antriebe, insbesondere der Stückgutförderantriebe auf eine gewünschte Applikation erreicht werden.

Zudem weist das Baukastensystem eine Befestigungseinheit auf, welche dazu vorgesehen ist, die Getriebeeinheiten und/oder die Elektronikeinheiten mechanisch und zumindest teilweise vibrationsentkoppelt mit zumindest einem Rahmen eines Stückgutförderers zu verbinden. Unter "mechanisch verbunden" soll insbesondere eine Verbindbarkeit über zumindest ein materielles Verbindungselement verstanden werden. Unter "zumindest teilweise vibrationsentkoppelt verbunden" soll in diesem Zusammenhang insbesondere verstanden werden, dass zwei verbundene Bauteile gegeneinander eingeschränkt bewegbar sind, vorzugsweise ist eine Verbindung zweier Bauteile mit einer Dämpfung versehen und/oder spielbehaftet. Unter "gegeneinander eingeschränkt bewegbar" soll hierbei insbesondere verstanden werden, dass eine Abstandsänderung, insbesondere zumindest teilweise in eine horizontale Richtung und/oder zumindest teilweise in eine vertikale Richtung, zweier Einheiten möglich ist, wobei insbesondere eine, bevorzugt beide Einheiten zu der Abstandsänderung beitragen. Insbesondere beträgt die mögliche Abstandsänderung maximal 5 mm, bevorzugt maximal 1 mm, besonders bevorzugt maximal 0,5 mm und vorzugsweise minimal 0,1 mm. Bevorzugt bilden zwei derartig verbundene Bauteile ein sogenanntes "Zwei-Komponenten-Teil". Dadurch kann vorteilhaft eine Übertragung einer Schwingung und/oder Vibrationsbewegung von einem Bauteil auf ein mit ihm verbundenes Bauteil verhindert werden, wodurch vorteilhaft eine Materialbelastung reduziert werden kann. Zudem kann durch eine zumindest teilweise vibrationsentkoppelte Verbindung vorteilhaft eine akustische Entkopplung und somit eine Geräuschreduzierung erreicht werden.

Vorzugsweise sind die Elektronikeinheiten an abtriebsfernen Seiten der Getriebeeinheiten und/oder die Elektronikeinheiten und die Getriebeeinheiten auf gegenüberliegenden Seiten der Motoreinheiten anordenbar, wodurch eine vorteilhafte Anordnung erreicht werden kann, welche insbesondere eine vorteilhafte Bauraumersparnis bei einer Herstellung von Antrieben, insbesondere Stückgutförderantrieben, bewirken kann.

Weiterhin wird vorgeschlagen, dass die Motoreinheiten zumindest im Wesentlichen identische Antriebswellen aufweisen, welche zur Kopplung mit den Getriebeeinheiten vorgesehen sind. Vorzugsweise weisen die Antriebswellen an zumindest einem Ende eine Verzahnung auf. Insbesondere sind die zumindest im Wesentlichen identischen Antriebswellen dazu vorgesehen, koppelbar mit allen Getriebeeinheiten der ersten Gruppe zu sein. Dadurch kann vorteilhaft eine weitere Erhöhung der Flexibilität bei einer Herstellung von Antrieben, insbesondere Stückgutförderantrieben erreicht werden. Zudem kann vorteilhaft eine Komplexität reduziert werden, insbesondere mittels einer Reduktion einer Anzahl verschiedener zu einer Kopplung nötiger Elemente, wodurch vorteilhaft eine Kostenreduktion erreicht werden kann. Es ist vorstellbar, dass eine Kopplung über ein kraft- und/oder formschlüssiges Einstecken der verzahnten Antriebswellen in dafür vorgesehene Aufnahmeelemente der Getriebeeinheiten bewerkstelligbar ist. Dadurch kann vorteilhaft eine erleichterte Montage und Demontage erreicht werden. Ferner ist vorstellbar, dass die Kopplung der Motoreinheiten mit den Getriebeeinheiten zumindest teilweise stoffschlüssig ist.

Unter "stoffschlüssig gekoppelt" soll insbesondere verstanden werden, dass die Masseteile durch atomare oder molekulare Kräfte zusammengehalten werden, wie beispielsweise beim Löten, Schweißen, Kleben und/oder Vulkanisieren.

Ferner wird vorgeschlagen, dass die zumindest eine, vorzugsweise zumindest zwei oder besonders bevorzugt alle der Getriebeeinheiten der ersten Gruppe ein Steckritzel aufweist, welches zur Aufnahme der Antriebswellen vorgesehen ist. Unter einem "Steckritzel" soll insbesondere ein Zahnrad verstanden werden, welches vorzugsweise eine Ausnehmung aufweist, die dazu vorgesehen ist eine Kopplung mit einem weiteren Bauteil, insbesondere einer Antriebswelle einer Motoreinheit, bevorzugt mittels eines Kraft- und/oder Formschlusses, zu ermöglichen. Dadurch kann vorteilhaft eine erleichterte Montage und Demontage erreicht werden. Zudem kann vorteilhaft ein Umbau und/oder eine technische und/oder elektronische Nach- und/oder Aufrüstung des Antriebs, insbesondere des Stückgutförderantriebs erleichtert werden. Es ist zudem vorstellbar, dass die Antriebswelle einstückig mit dem Steckritzel ausgebildet ist und/oder dass insbesondere ein Teil der Getriebeeinheiten ohne das Steckritzel ausgebildet ist, wobei vorzugsweise die Getriebeeinheiten dazu vorgesehen sind direkt mit der Antriebswelle, welche eine Verzahnung aufweist, zu verzahnen und/oder das die Antriebswelle ein Sonnenrad des Planetengetriebes ausbildet.

In einer besonders bevorzugten Ausgestaltung der Erfindung weisen die Motoreinheiten zumindest im Wesentlichen und vorzugsweise vollständig identische magnetische Sensoren auf, welche zur Kopplung mit den Elektronikeinheiten vorgesehen sind, wodurch vorteilhaft eine weitere Erhöhung der Flexibilität bei einer Herstellung von Antrieben, insbesondere Stückgutförderantrieben erreicht werden kann. Zudem kann vorteilhaft eine Komplexität reduziert werden, insbesondere mittels einer Reduktion einer Anzahl verschiedener zu einer Kopplung nötiger Elemente, wodurch vorteilhaft eine Kostenreduktion erreicht werden kann. Insbesondere weist jede Motoreinheit jeweils zumindest einen, bevorzugt genau einen magnetischen Sensor auf. Unter einem "magnetischen Sensor" soll insbesondere eine Sensoreinheit verstanden werden, welche dazu vorgesehen ist, ein Magnetfeld und/oder eine Magnetfeldänderung zu empfangen und/oder zu registrieren und/oder auszusenden und/oder zu modulieren und/oder zu erzeugen. Insbesondere kann der magnetische Sensor zumindest teilweise als ein Sensormagnet und/oder als ein Hall Sensor und/oder als eine Spule und/oder als ein Permanentmagnet und/oder als ein weiterer, dem Fachmann geläufiger magnetischer Sensor ausgebildet sein. Insbesondere kann der magnetische Sensor dazu vorgesehen sein, eine Schwingung zu detektieren und/oder Stellungen eines Elektromotors zu bestimmen und/oder eine Rotationsbewegung der Stückgutförderrolle und/oder des Elektromotors zu detektieren und/oder einen Betriebsmodus des Antriebs, insbesondere des Stückgutförderantriebs zu detektieren. Vorzugsweise kooperieren die magnetischen Sensoren elektronisch mit den Elektronikeinheiten, damit vorteilhaft eine Signalübertragung, insbesondere eine Informationsübertragung zwischen Motoreinheiten und Elektronikeinheiten erreicht werden kann.

Ferner wird ein Verfahren zur Herstellung von Antrieben unter Verwendung einer Stückgutförderrolle eines Stückgutförderers mit einem Baukastensystem vorgeschlagen, mit zumindest einer ersten Gruppe von Getriebeeinheiten, welche zumindest eine Getriebeeinheit umfasst, mit zumindest einer zweiten Gruppe von Motoreinheiten, welche zumindest eine Motoreinheit umfasst, und einer dritten Gruppe von Elektronikeinheiten, welche zumindest ein Elektronikmodul zur Ansteuerung der Motoreinheit umfasst, wobei zumindest eine Getriebeeinheit aus der ersten Gruppe, zumindest eine Motoreinheit aus der zweiten Gruppe und zumindest eine Elektronikeinheit aus der dritten Gruppe zur Herstellung eines Antriebs, insbesondere eines Stückgutförderantriebs, mit gewünschten Antriebseigenschaften miteinander kombiniert werden. Hierdurch können Antriebe, insbesondere Stückgutförderantriebe, mit unterschiedlichen Antriebseigenschaften kostengünstig bereitgestellt werden. Insbesondere kann dadurch vorteilhaft eine hohe Flexibilität erreicht werden. Weiterhin kann ein vereinfachter Umbau und/oder eine vereinfachte Modifikation und/oder ein vereinfachtes technisches und/oder elektronisches Auf- und/oder Nachrüsten der Antriebe, insbesondere der Stückgutförderantriebe, insbesondere durch den Anwender selbst, ermöglicht werden.

Das Baukastensystem soll hierbei nicht auf die oben beschriebene Ausführungsform beschränkt sein.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine vereinfachte schematische Darstellung eines Antriebs,
- Fig. 2: ein Baukastensystem zur Herstellung von Antrieben und
- Fig. 3: ein Ablaufdiagramm eines Verfahrens zur Herstellung von Antrieben unter Nutzung des Baukastensystems.

### Beschreibung des Ausführungsbeispiels

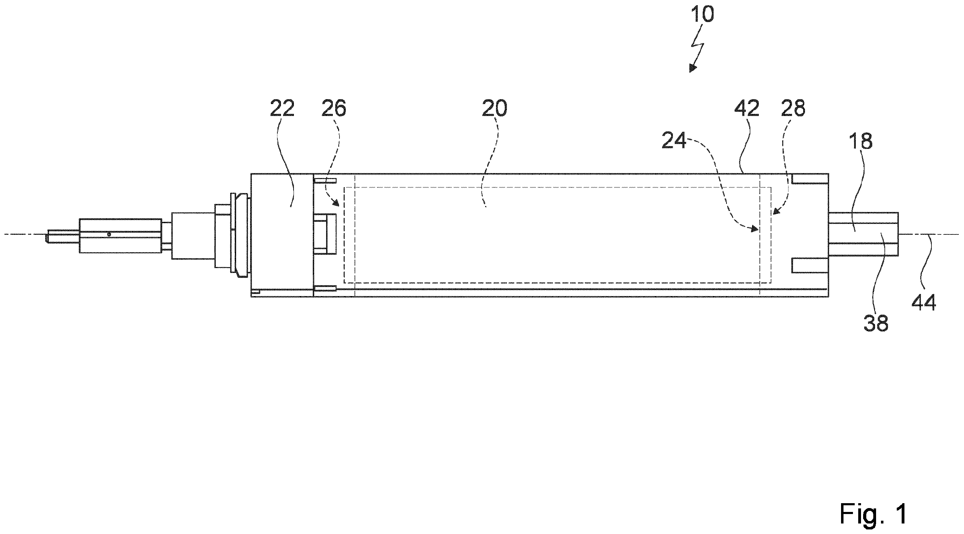

Fig. 1 zeigt einen beispielhaften Antrieb 10. Der Antrieb 10 ist als ein Stückgutförderantrieb, insbesondere als eine Motorrolle, ausgebildet. Der Antrieb 10 weist eine Getriebeeinheit 18, eine Motoreinheit 20 und eine Elektronikeinheit 22 auf. Die Elektronikeinheit 22 ist mechanisch mit der Motoreinheit 20 verbunden. Die Verbindung zwischen der Elektronikeinheit 22 und der Motoreinheit 20 ist eine Pressverbindung. Die Elektronikeinheit 22 ist in die Motoreinheit 20 eingepresst. Der Antrieb 10 weist ein Gehäuse 42 auf. Die Elektronikeinheit 22 ist teilweise in das Gehäuse 42 eingesteckt. Die Getriebeeinheit 18 ist teilweise in das Gehäuse 42 eingesteckt. Die Motoreinheit 20 ist in Umlaufsrichtung vollständig von dem Gehäuse 42 umschlossen.

Die Elektronikeinheit 22 ist an einer abtriebsfernen Seite 24 der Getriebeeinheit 18 angeordnet. Die Motoreinheit 20 ist an einer abtriebsfernen Seite 24 der Getriebeeinheit 18 angeordnet. Die Elektronikeinheit 22 und die Getriebeeinheit 18 sind auf gegenüberliegenden Seiten 26, 28 der Motoreinheit 20 angeordnet.

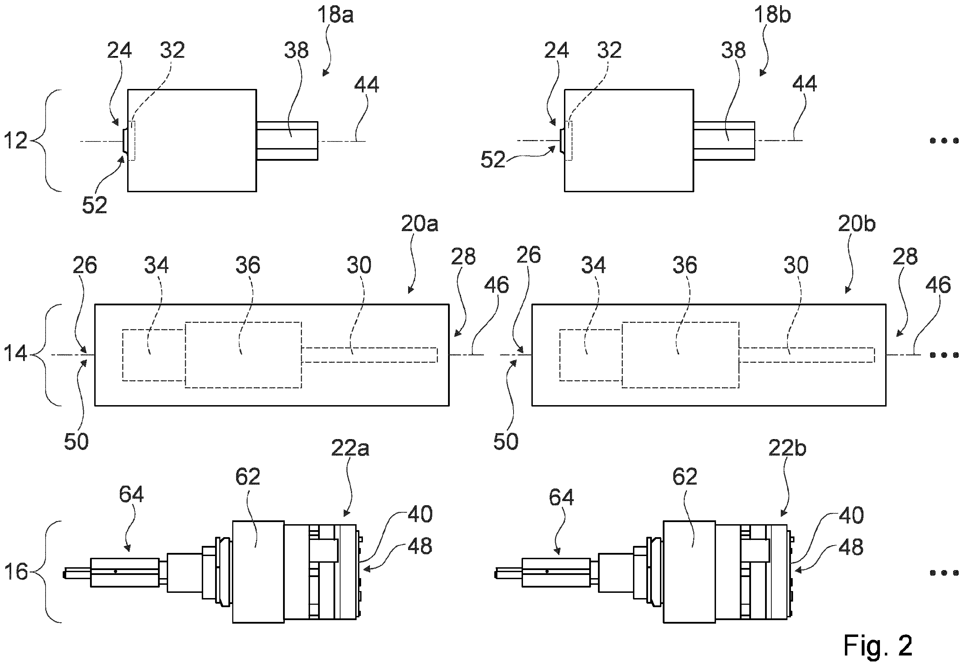

Fig. 2 zeigt ein Baukastensystem zur Herstellung von Antrieben 10 mit unterschiedlichen Antriebseigenschaften. Mit Hilfe des Baukastensystems ist auch der Antrieb 10 aus Fig. 1 hergestellt. Das Baukastensystem umfasst eine erste Gruppe 12 von Getriebeeinheiten 18a, 18b. Die erste Gruppe 12 umfasst hier beispielhaft zwei verschieden zueinander ausgebildete Getriebeeinheiten 18a, 18b. Die erste Gruppe 12 kann insbesondere auch mehr als zwei Getriebeeinheiten 18a, 18b oder nur eine einzige Getriebeeinheit 18a, 18b umfassen. Außenmaße zumindest zweier, bevorzugt aller Getriebeeinheiten 18a, 18b der ersten Gruppe 12 sind im Wesentlichen identisch zueinander ausgebildet. Die Getriebeeinheiten 18a, 18b weisen verschiedene Getriebeübersetzungen auf. Die Getriebeeinheiten 18a, 18b weisen jeweils ein Steckritzel 32 zur Aufnahme einer Antriebswelle 30 von Motoreinheiten 20a, 20b auf. Die Getriebeeinheiten 18a, 18b weisen eine Getriebeschnittstelle 52 auf. Das Steckritzel 32 stellt eine definierte Getriebeschnittstelle 52 der Getriebeeinheiten 18a, 18b zum Anbau der Motoreinheiten 20a, 20b dar. Es ist zudem vorstellbar, dass zumindest eine Getriebeeinheit 18a, 18b eine Getriebeschnittstelle 52 ohne Steckritzel 32 aufweist und die Antriebswelle 30 dazu vorgesehen ist direkt mit der Getriebeeinheit 18a, 18b zu verzahnen. Die Getriebeeinheiten 18a, 18b weisen jeweils einen Abtrieb 38 auf. Der Abtrieb 38 ist dazu vorgesehen, eine Ausgangsdrehbewegung um eine Abtriebsdrehachse 44 auszugeben.

Das Baukastensystem umfasst ferner eine zweite Gruppe 14 von Motoreinheiten 20a, 20b. Die zweite Gruppe 14 umfasst hier beispielhaft zwei verschieden zueinander ausgebildete Motoreinheiten 20a, 20b. Die zweite Gruppe 14 kann insbesondere auch mehr als zwei Motoreinheiten 20a, 20b oder nur eine einzige Motoreinheit 20a, 20b umfassen. Außenmaße zumindest zweier, bevorzugt aller Motoreinheiten 20a, 20b der zweiten Gruppe 14 sind im Wesentlichen identisch zueinander ausgebildet. Die Motoreinheiten 20a, 20b weisen verschiedene Motorleistungsklassen auf. Die Motoreinheiten 20a, 20b weisen verschiedene Motorspannungsklassen auf. Die Antriebswellen 30 der Motoreinheiten 20a, 20b sind identisch zueinander ausgebildet. Die Antriebswellen 30 sind dazu vorgesehen, eine Kopplung mit den Getriebeeinheiten 18a, 18b herzustellen. Die Motoreinheiten 20a, 20b weisen jeweils eine definierte Motorschnittstelle 50 zum Anbau der Elektronikeinheiten 22a, 22b auf. Die Antriebswellen 30 sind auf der den Motorschnittstellen 50 gegenüberliegenden Seiten 28 der Motoreinheiten 20a, 20b angeordnet.

Die Motoreinheiten 20a, 20b weisen einen elektrischen Motor 36 auf. Der elektrische Motor 36 ist dazu vorgesehen, eine Drehbewegung der Antriebswelle 30 um eine Antriebsdrehachse 46 zu erzeugen. Die Motoreinheiten 20a, 20b weisen jeweils einen magnetischen Sensor 34 auf. Die magnetischen Sensoren 34 sind zur Kopplung mit Elektronikeinheiten 22a, 22b vorgesehen. Die magnetischen Sensoren 34 sind zueinander identisch ausgebildet.

Das Baukastensystem umfasst ferner eine dritte Gruppe 16 von Elektronikeinheiten 22a, 22b. Die Elektronikeinheiten 22a, 22b sind dazu vorgesehen, die Motoreinheiten 20a, 20b anzusteuern. Die dritte Gruppe 16 umfasst hier beispielhaft zwei verschieden zueinander ausgebildete Elektronikeinheiten 22a, 22b. Die dritte Gruppe 16 kann insbesondere auch mehr als zwei Elektronikeinheiten 22a, 22b oder nur eine einzige Elektronikeinheit 22a, 22b umfassen. Außenmaße zumindest zweier, bevorzugt aller Elektronikeinheiten 22a, 22b der dritten Gruppe 16 sind im Wesentlichen identisch zueinander ausgebildet. Die Elektronikeinheiten 22a, 22b weisen verschiedene Elektronikleistungsklassen auf. Die Elektronikeinheiten 22a, 22b weisen verschiedene Elektronikspannungsklassen auf. Die Elektronikeinheiten 22a, 22b weisen verschiedene Elektronikfunktionsklassen auf. Die Elektronikfunktionsklassen unterscheiden sich voneinander durch das Vorhandensein zumindest einer verschiedenen Funktionalität, bevorzugt einer verschiedenen Kombination von Funktionalitäten. Die Elektronikeinheiten 22a, 22b weisen jeweils eine Leiterplatte 40 auf. Die Elektronikeinheiten 22a, 22b weisen jeweils eine definierte Elektronikschnittstelle 48 zum Anbau der Motoreinheiten 20a, 20b auf.

Das Baukastensystem, insbesondere die Elektronikeinheiten 22a, 22b, weist eine Befestigungseinheit 64 auf. Die Befestigungseinheit 64 ist dazu vorgesehen die Elektronikeinheiten 22a, 22b mechanisch und zumindest teilweise vibrationsentkoppelt mit zumindest einem von dem Baukastensystem verschiedenen Bauteil zu verbinden. Zudem ist vorstellbar, dass die Befestigungseinheit 64 dazu vorgesehen ist, die Getriebeeinheiten 18a, 18b und/oder die Motoreinheiten 20a, 20b mechanisch und zumindest teilweise vibrationsentkoppelt mit zumindest einem von dem Baukastensystem verschiedenen Bauteil zu verbinden. Die Elektronikeinheiten 22a, 22b weisen eine mechanische Entkopplung 62, zur Vibrationsentkopplung auf. Die mechanische Entkopplung 62 entkoppelt die Elektronikeinheiten 22a, 22b, insbesondere den Antrieb 10, zumindest teilweise von, insbesondere von außen kommenden, Vibrationen.

Zu einer Herstellung eines Antriebs 10 sind die erste Gruppe 12 von Getriebeeinheiten 18a, 18b, die zweite Gruppe 14 von Motoreinheiten 20a, 20b und die dritte Gruppe 16 von Elektronikeinheiten 22a, 22b beliebig miteinander kombinierbar.

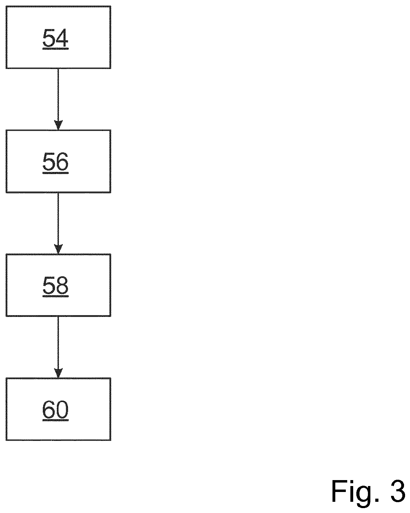

Fig. 3 zeigt ein schematisches Ablaufdiagramm eines Verfahrens zur Herstellung von Antrieben 10 unter Verwendung des Baukastensystems. Hierbei werden jeweils eine Getriebeeinheit 18a, 18b der ersten Gruppe 12, eine Motoreinheit 20a, 20b der zweiten Gruppe 14 und eine Elektronikeinheit 22a, 22b der dritten Gruppe 16 miteinander kombiniert. In einem Verfahrensschritt 54 wird aus der ersten Gruppe 12 eine der Getriebeeinheiten 18a, 18b ausgewählt. In einem Verfahrensschritt 56 wird aus der zweiten Gruppe 14 eine der Motoreinheiten 20a, 20b ausgewählt. In einem Verfahrensschritt 58 wird aus der dritten Gruppe 16 eine der Elektronikeinheiten 22a, 22b ausgewählt. In einem Verfahrensschritt 60 werden die ausgewählte Getriebeeinheit 18a, 18b, die ausgewählte Motoreinheit 20a, 20b und die ausgewählte Elektronikeinheit 22a, 22b kraftschlüssig und/oder formschlüssig und/oder stoffschlüssig in Verbindung gebracht.

## Patentansprüche

1. Stückgutförderrolle eines Stückgutförderers mit einem Baukastensystem zur Herstellung von Rotationsantrieben (10) der Stückgutförderrolle des Stückgutförderers mit unterschiedlichen Antriebseigenschaften,
mit zumindest einer ersten Gruppe (12) von Getriebeeinheiten (18a, 18b), welche zumindest zwei Getriebeeinheiten (18a, 18b) umfasst,
mit zumindest einer zweiten Gruppe (14) von Motoreinheiten (20a, 20b), welche zumindest zwei Motoreinheiten (20a, 20b) umfasst,
und mit einer dritten Gruppe (16) von Elektronikeinheiten (22a, 22b), welche zumindest zwei Elektronikeinheiten (22a, 22b) zur Ansteuerung der Motoreinheiten (20a, 20b) umfasst,
welche zur Herstellung des Antriebs (10) miteinander kombinierbar sind,
wobei der Antrieb (10) ein Gehäuse (42) aufweist, in welches die Elektronikeinheiten (22) und die Getriebeeinheiten (18) jeweils teilweise einsteckbar sind,
wobei die Elektronikeinheiten (22a, 22b) und die Getriebeeinheiten (18a, 18b) auf gegenüberliegenden Seiten (26, 28) der Motoreinheiten (20a, 20b) anordenbar sind,
und wobei die Motoreinheiten (20) in ihren Umlaufsrichtungen vollständig von dem Gehäuse (42) umschlossen werden,
ferner aufweisend eine Befestigungseinheit (64), welche ausgebildet ist, die Getriebeeinheiten (18a, 18b) und/oder die Elektronikeinheiten (22a, 22b) mechanisch und zumindest teilweise vibrationsentkoppelt mit zumindest einem Rahmen des Stückgutförderers zu verbinden.

2. Stückgutförderrolle nach Anspruch 1, **dadurch gekennzeichnet, dass** die Gruppen (12, 14, 16) von Getriebeeinheiten (18a, 18b), Motoreinheiten (20a, 20b) und Elektronikeinheiten (22a, 22b) beliebig miteinander kombinierbar sind.

3. Stückgutförderrolle nach Anspruch 1 oder 2, **dadurch gekennzeichnet, dass** die erste Gruppe (12) zumindest zwei verschiedene Getriebeeinheiten (18a, 18b) mit verschiedenen Getriebeübersetzungen umfasst.

4. Stückgutförderrolle nach einem der vorhergehenden Ansprüche, **dadurch gekennzeichnet, dass** die zweite Gruppe (14) zumindest zwei Motoreinheiten (20a, 20b) mit verschiedenen Motorleistungsklassen umfasst.

5. Stückgutförderrolle nach einem der vorhergehenden Ansprüche, **dadurch gekennzeichnet, dass** die zweite Gruppe (14) zumindest zwei Motoreinheiten (20a, 20b) mit verschiedenen Motorspannungsklassen umfasst.

6. Stückgutförderrolle nach einem der vorhergehenden Ansprüche, **dadurch gekennzeichnet, dass** die dritte Gruppe (16) zumindest zwei Elektronikeinheiten (22a, 22b) mit verschiedenen Elektronikleistungsklassen umfasst.

7. Stückgutförderrolle nach einem der vorhergehenden Ansprüche, **dadurch gekennzeichnet, dass** die dritte Gruppe (16) zumindest zwei Elektronikeinheiten (22a, 22b) mit verschiedenen Elektronikspannungsklassen umfasst.

8. Stückgutförderrolle nach einem der vorhergehenden Ansprüche, **dadurch gekennzeichnet, dass** die dritte Gruppe (16) zumindest zwei Elektronikeinheiten (22a, 22b) mit verschiedenen Elektronikfunktionsklassen umfasst.

9. Stückgutförderrolle nach einem der vorhergehenden Ansprüche, **dadurch gekennzeichnet, dass** die Elektronikeinheiten (22a, 22b) an abtriebsfernen Seiten (24) der Getriebeeinheiten (18a, 18b) anordenbar sind.

10. Stückgutförderrolle nach einem der vorhergehenden Ansprüche, **dadurch gekennzeichnet, dass** die Motoreinheiten (20a, 20b) zumindest im Wesentlichen identische Antriebswellen (30) aufweisen, welche zur Kopplung mit den Getriebeeinheiten (18a, 18b) vorgesehen sind.

11. Stückgutförderrolle nach Anspruch 10, **dadurch gekennzeichnet, dass** zumindest eine der Getriebeeinheiten (18a, 18b) der ersten Gruppe (12) ein Steckritzel (32) aufweist, welches zur Aufnahme der Antriebswellen (30) vorgesehen ist.

12. Stückgutförderrolle nach einem der vorhergehenden Ansprüche, **dadurch gekennzeichnet, dass** die Motoreinheiten (20a, 20b) zumindest im Wesentlichen identische magnetische Sensoren (34) aufweisen, welche zur Kopplung mit den Elektronikeinheiten (22a, 22b) vorgesehen sind.

13. Verfahren zur Herstellung von Antrieben (10) unter Verwendung einer Stückgutförderrolle eines Stückgutförderers mit einem Baukastensystem nach einem der vorhergehenden Ansprüche, mit zumindest einer ersten Gruppe (12) von Getriebeeinheiten (18a, 18b), welche zumindest zwei Getriebeeinheiten (18a, 18b) umfasst, mit zumindest einer zweiten Gruppe (14) von Motoreinheiten (20a, 20b), welche zumindest zwei Motoreinheiten (20a, 20b) umfasst, und einer dritten Gruppe (16) von Elektronikeinheiten (22a, 22b), welche zumindest zwei Elektronikeinheiten (22a, 22b) zur Ansteuerung der Motoreinheiten (20a, 20b) umfasst, wobei zumindest eine Getriebeeinheit (18a, 18b) aus der ersten Gruppe (12), zumindest eine Motoreinheit (20a, 20b) aus der zweiten Gruppe (14) und zumindest eine Elektronikeinheit (22a, 22b) aus der dritten Gruppe (16) zur Herstellung eines Antriebs (10) mit gewünschten Antriebseigenschaften miteinander kombiniert werden.

## Claims

1. A piece goods conveyor roller of a piece goods conveyor with a modular system for manufacturing rotary drives (10) of the piece goods conveyor roller of the piece goods conveyor with different drive properties, with
at least one first group (12) of gear units (18a, 18b) which comprises at least two gear units (18a, 18b),
with at least one second group (14) of motor units (20a, 20b) which comprises at least two motor units (20a, 20b),
and with a third group (16) of electronics units (22a, 22b) which comprises at least two electronics units (22a, 22b) for controlling the motor units (20a, 20b),
which can be combined with one another to produce the drive (10),
wherein the drive (10) has a housing (42) into which the electronics units (22) and the gear units (18) can each be partially inserted,
wherein the electronics units (22a, 22b) and the gear units (18a, 18b) can be arranged on opposite sides (26, 28) of the motor units (20a, 20b),
and wherein the motor units (20) are completely enclosed by the housing (42) in their directions of rotation,
further comprising a fastening unit (64) which is designed to connect the gear units (18a, 18b) and/or the electronics units (22a, 22b) mechanically and in an at least partially vibration-decoupled manner to at least one frame of the piece goods conveyor.

2. The piece goods conveyor roller according to claim 1, **characterized in that** the groups (12, 14, 16) of gear units (18a, 18b), motor units (20a, 20b), and electronics units (22a, 22b) can be combined with one another as desired.

3. The piece goods conveyor roller according to claim 1 or 2, **characterized in that** the first group (12) comprises at least two different gear units (18a, 18b) with different gear ratios.

4. The piece goods conveyor roller according to any one of the preceding claims, **characterized in that** the second group (14) comprises at least two motor units (20a, 20b) of different motor power classes.

5. The piece goods conveyor roller according to any one of the preceding claims, **characterized in that** the second group (14) comprises at least two motor units (20a, 20b) of different motor voltage classes.

6. The piece goods conveyor roller according to any one of the preceding claims, **characterized in that** the third group (16) comprises at least two electronics units (22a, 22b) of different electronics performance classes.

7. The piece goods conveyor roller according to any one of the preceding claims, **characterized in that** the third group (16) comprises at least two electronics units (22a, 22b) of different electronics voltage classes.

8. The piece goods conveyor roller according to any one of the preceding claims, **characterized in that** the third group (16) comprises at least two electronics units (22a, 22b) of different electronics function classes.

9. The piece goods conveyor roller according to any one of the preceding claims, **characterized in that** the electronics units (22a, 22b) can be arranged on sides (24) of the gear units (18a, 18b) that are remote from the output.

10. The piece goods conveyor roller according to any one of the preceding claims, **characterized in that** the motor units (20a, 20b) have at least substantially identical drive shafts (30) which are provided for coupling with the gear units (18a, 18b).

11. The piece goods conveyor roller according to claim 10, **characterized in that** at least one of the gear units (18a, 18b) of the first group (12) has a pinion (32) which is provided for receiving the drive shafts (30).

12. The piece goods conveyor roller according to any one of the preceding claims, **characterized in that** the motor units (20a, 20b) have at least substantially identical magnetic sensors (34) which are provided for coupling to the electronics units (22a, 22b).

13. A method for manufacturing drives (10) using a piece goods conveyor roller of a piece goods conveyor with a modular system according to any one of the preceding claims, with at least one first group (12) of gear units (18a, 18b) which comprises at least two gear units (18a, 18b), with at least one second group (14) of motor units (20a, 20b) which comprises at least two motor units (20a, 20b), and a third group (16) of electronics units (22a, 22b) which comprises at least two electronics units (22a, 22b) for controlling the motor units (20a, 20b),
wherein at least one gear unit (18a, 18b) from the first group (12), at least one motor unit (20a, 20b) from the second group (14), and at least one electronics unit (22a, 22b) from the third group (16) are combined to produce a drive (10) with desired drive characteristics.

## Revendications

1. Rouleau convoyeur de charges isolées d'un convoyeur de charges isolées, comprenant un système modulaire pour la fabrication de dispositifs d'entraînement rotatif (10) du rouleau convoyeur de charges isolées du convoyeur de charges isolées présentant différentes propriétés d'entraînement, comprenant
au moins un premier groupe (12) d'unités de transmission (18a, 18b) qui comprend au moins deux unités de transmission (18a, 18b),
au moins un deuxième groupe (14) d'unités de moteur (20a, 20b) qui comprend au moins deux unités de moteur (20a, 20b),
et un troisième groupe (16) d'unités électroniques (22a, 22b) qui comprend au moins deux unités électroniques (22a, 22b) pour piloter les unités de moteur (20a, 20b),
qui peuvent être combinés pour fabriquer le dispositif d'entraînement (10),
dans lequel le dispositif d'entraînement (10) présente un carter (42) dans lequel les unités électroniques (22) et les unités de transmission (18) peuvent être insérées respectivement en partie,
dans lequel les unités électroniques (22a, 22b) et les unités de transmission (18a, 18b) peuvent être disposées sur des côtés opposés (26, 28) des unités de moteur (20a, 20b),
et dans lequel les unités de moteur (20) sont entourées entièrement par le carter (42) dans leurs directions périphériques,
présentant en outre une unité de fixation (64) qui est réalisée pour relier les unités de transmission (18a, 18b) et/ou les unités électroniques (22a, 22b) mécaniquement et au moins partiellement découplées en vibration à au moins un bâti du convoyeur de charges isolées.

2. Rouleau convoyeur de charges isolées selon la revendication 1, **caractérisé en ce que** les groupes (12, 14, 16) d'unités de transmission (18a, 18b), d'unités de moteur (20a, 20b) et d'unités électroniques (22a, 22b) peuvent être combinées librement les unes avec les autres.

3. Rouleau convoyeur de charges isolées selon la revendication 1 ou 2, **caractérisé en ce que** le premier groupe (12) comprend au moins deux unités de transmission (18a, 18b) différentes avec différents rapports de transmission.

4. Rouleau convoyeur de charges isolées selon l'une quelconque des revendications précédentes, **caractérisé en ce que** le deuxième groupe (14) comprend au moins deux unités de moteur (20a, 20b) avec différentes classes de puissance de moteur.

5. Rouleau convoyeur de charges isolées selon l'une quelconque des revendications précédentes, **caractérisé en ce que** le deuxième groupe (14) comprend au moins deux unités de moteur (20a, 20b) avec différentes classes de tension de moteur.

6. Rouleau convoyeur de charges isolées selon l'une quelconque des revendications précédentes, **caractérisé en ce que** le troisième groupe (16) comprend au moins deux unités électroniques (22a, 22b) avec différentes classes de puissance électronique.

7. Rouleau convoyeur de charges isolées selon l'une quelconque des revendications précédentes, **caractérisé en ce que** le troisième groupe (16) comprend au moins deux unités électroniques (22a, 22b) avec différentes classes de tension électronique.

8. Rouleau convoyeur de charges isolées selon l'une quelconque des revendications précédentes, **caractérisé en ce que** le troisième groupe (16) comprend au moins deux unités électroniques (22a, 22b) avec différentes classes de fonctions électroniques.

9. Rouleau convoyeur de charges isolées selon l'une quelconque des revendications précédentes, **caractérisé en ce que** les unités électroniques (22a, 22b) peuvent être disposées sur des côtés (24), éloignés de la sortie, des unités de transmission (18a, 18b).

10. Rouleau convoyeur de charges isolées selon l'une quelconque des revendications précédentes, **caractérisé en ce que** les unités de moteur (20a, 20b) présentent des arbres d'entraînement (30) au moins substantiellement identiques qui sont prévus pour le couplage avec les unités de transmission (18a, 18b).

11. Rouleau convoyeur de charges isolées selon la revendication 10, **caractérisé en ce qu'**au moins l'une des unités de transmission (18a, 18b) du premier groupe (12) présente un pignon de connexion (32) qui est prévu pour recevoir les arbres d'entraînement (30).

12. Rouleau convoyeur de charges isolées selon l'une quelconque des revendications précédentes, **caractérisé en ce que** les unités de moteur (20a, 20b) présentent des capteurs magnétiques (34) au moins substantiellement identiques, qui sont prévus pour le couplage avec les unités électroniques (22a, 22b).

13. Procédé permettant de fabriquer des dispositifs d'entraînement (10) en utilisant un rouleau de convoyeur de charges isolées d'un convoyeur de charges isolées à l'aide d'un système modulaire selon l'une quelconque des revendications précédentes, comprenant au moins un premier groupe (12) d'unités de transmission (18a, 18b) qui comprend au moins deux unités de transmission (18a, 18b), au moins un deuxième groupe (14) d'unités de moteur (20a, 20b) qui comprend au moins deux unités de moteur (20a, 20b), et un troisième groupe (16) d'unités électroniques (22a, 22b) qui comprend au moins deux unités électroniques (22a, 22b) pour piloter les unités de moteur (20a, 20b),
dans lequel au moins une unité de transmission (18a, 18b) du premier groupe (12), au moins une unité de moteur (20a, 20b) du deuxième groupe (14) et au moins une unité électronique (22a, 22b) du troisième groupe (16) peuvent être combinées les unes avec les autres pour fabriquer un dispositif d'entraînement (10) présentant des propriétés d'entraînement souhaitées.
